# EUROPEAN PATENT APPLICATION

(11) **EP 4 401 295 A1**
(43) Date of publication of application: **17.07.2024**
(21) Application number: 23151143.7
(22) Date of filing: 11.01.2023
(51) Int. Cl.: H02M 5/458, H02M 7/487, H02M 7/483, H05B 7/144

(54) **HYBRID MODULAR MULTILEVEL CONVERTER (HMMC) FOR HIGHLY DYNAMIC LOAD APPLICATIONS**

(71) Applicant: GE Energy Power Conversion Technology Ltd, Rugby, Warwickshire CV21 1BD (GB)
(72) Inventor: ZHOU, Zhi, 123091027 Niskayuna (US); BASIC, Duro, 91140 VILLEBON SUR YVETTE (FR); POPOVSKI, Anthony, 15126 Findlay Township (US)
(74) Representative: Casalonga

(57) **Abstract**

An AC-DC-AC converter for delivering power to a load from a power source is presented. The AC-DC-AC converter comprises a front-end converter (10), a load-end converter (11), and a DC link (4), at least one of the front-end converter (10) and the load-end converter (11) being a hybrid modular multilevel converter.

## Description

The invention relates to modular multilevel converters and more precisely, to such modular multilevel converters powering up an electric arc furnace.

### BACKGROUND

High temperature furnaces are indispensable for refining ores, recycling scrap metal and for metalworking in general, reaching temperatures around 1800°C for 1 ton to 400 tons of material. Such furnaces are generally heated with coal, oil or gas. In an effort to replace the hydrocarbon-fuel fired furnaces, electric furnaces and in particular, electric three-phase arc furnaces ("EAF") have been developed. Those electric furnaces comprise graphite electrodes generating electric arcs through the material loaded in the furnace, heating it through the Joule effect.

In the conventional AC EAF supply systems, the EAF current is controlled by a combination of tap positions of the EAF supply stepdown transformer and series current limiting reactors combined by relatively slow control of the electrodes positions. Due to instability of arc voltages especially during early phases of melting of scrap material, the arcs are often interrupted, or electrode short circuits are created causing short circuit currents in excess of typically two times of a nominal current. Thus, the conventional EAFs are sources of strong disturbances to the power supply systems which are hard to mitigate. Large fluctuations of reactive and active power demands are a major source of voltage flicker and inherent non-linearity of arc voltages is a source of distortion in the supply currents (imbalance, harmonics and inter-harmonics). The traditional approach to mitigate power system disturbances caused by EAF and to improve power quality ("PQ") is to use shunt compensation like shunt passive harmonic filters or capacitors, static VAR compensators ("SVC") and/or static synchronous compensators ("STATCOMs") to compensate for the non-active current components produced by EAFs.

However, particularly in cases when strength of the power supply (short circuit power capacity) relative to the EAF power rating is low, the curative shunt compensation can't provide sufficient improvements of the EAF generated PQ issues, in particular required reduction of the voltage flicker to meet the standard limits.

New power converters are therefore required which can be inserted between the power supply and EAF and used to directly control the EAF currents and supply currents.

Prior art US8,933,378 B2 and EP2924867B1 describe and teach an AC-DC-AC indirect converter for electric arc furnace supply via medium voltage ("MV") or primary side of the EAF transformer. The AC-DC-AC indirect converter consists of two traditional modular multilevel converters ("MMCs"), one as front-end ("FE") converter for converting the main AC power to DC and another as load-end converter for converting the DC power to AC power for powering the load. The MMCs comprise several submodules ("SMs") that are either full-bridge ("FB") modules or half-bridge ("HB") modules. The EAF connected to the load end converter is highly dynamic with significant load current and power variation.

The back-to-back MMC-based indirect AC-DC-AC topology is effective in fast regulation and limitation of the EAF currents, improvement of arc stability and power transfer (reduced power fluctuations), and hence reduction of heating time and power consumption (efficiency increase). At the same time by maintaining a desired DC link voltage, the power supply and EAF side converter are decoupled. The intermediate dc link current is a function of the total EAF active power demand. This power demand is met by the source side AC/DC converter via high quality control of three-phase balanced source currents. Only magnitude of the source current is changed in accordance to the DC current or EAF power demand change.

There is however a need for an alternative to the AC-DC-AC converter as disclosed in the prior art, that is smaller, more compact and power dense, more efficient, reliable and cost effective, in particular for electric arc furnace.

### SUMMARY OF THE EMBODIMENTS

An object of the invention is an AC-DC-AC converter for delivering power to a load from a power source. The AC-DC-AC converter comprises a front-end converter, a load-end converter, and a DC link, at least one of the front-end converter and the load-end converter is a hybrid modular multilevel converter ("HMMC").

A first embodiment of the invention is an AC-DC-AC converter for delivering power to a load from a power source, comprising a front-end converter, a load-end converter, and a DC link, wherein the front-end converter is a hybrid modular multilevel converter and the load-end converter is a modular multilevel converter.

A second embodiment of the invention is an AC-DC-AC converter for delivering power to a load from a power source, comprising a front-end converter, a load-end converter, and a DC link, wherein the front-end converter is a modular multilevel converter and the load-end converter is a hybrid modular multilevel converter

A third embodiment of the invention is an AC-DC-AC converter for delivering power to a load from a power source, comprising a front-end converter, a load-end converter, and a DC link, wherein both the front-end converter and the load-end converter are hybrid modular multilevel converters.

The invention is also aimed toward different embodiments of a hybrid modular multilevel converter.

In a first embodiment, the hybrid modular multilevel converter comprises at least one leg, each leg being connected to an AC connection and to the three DC connections, each leg comprising at least four controllable switches of a plurality of controllable switches and two branches, a first end of a first controllable switch connected to a first DC connection, a first end of a second controllable switch connected to a second end of the first controllable switch, the second end of the second controllable switch connected to a second DC connection, a first end of a third controllable switch connected to a second end of the second controllable switch and to the second DC connection, a first end of a fourth controllable switch connected to a second end of the third controllable switch, a second end of the fourth controllable switch is connected to the third DC connection, the first branch comprising at least one submodule of a plurality of submodules connected in series, the first branch being connected by a first submodule to a second end of the first controllable switch and to a first end of the second controllable switch, the first branch being connected to the AC connection, the second branch comprising at least one submodule of a plurality of submodules connected in series, the second branch being connected by a first submodule to a second end of the third controllable switch and to a first end of the fourth controllable switch, the second branch being connected to the AC connection.

In a preferred mode of realization of the first embodiment, the submodules are controllable switches in a full-bridge configuration or hybrid configuration for applications where the DC link voltage is less than the peak / maximum AC phase voltage; or in a half-bridge configuration for applications where the DC link voltage is greater than the peak / maximum AC phase voltage.

In a second embodiment, the hybrid modular multilevel converter comprises at least one leg, each leg being connected to an AC connection and to the three DC connections, each leg comprising at least two pairs of controllable switches of a plurality of pairs of controllable switches connected in series with opposite polarities, at least two controllable switches of a plurality of controllable switches connected in series, a first end of a first controllable switch of the first pair of controllable switches connected to a first DC connection, a second end of a second controllable switch of the first pair of controllable switches is connected to the second end of the first controllable switch of the first pair of controllable switches, a first end of a third controllable switch is connected to the first end of the second controllable switch of the first pair of controllable switches, the second end of the third controllable switch is connected to the AC connection, a first end of a fourth controllable switch of the second pair of controllable switches is connected to a third DC connection, a second end of a fifth controllable switch of the second pair of controllable switches is connected to a second end of the fourth controllable switch of the second pair of controllable switches, a second end of a sixth controllable switch is connected to the first end of the fifth controllable switch of the second pair of controllable switches, a first end of the sixth controllable switch is connected to the AC connection, the first branch comprising at least one submodule of a plurality of submodules connected in series, the first branch being connected by a first submodule to the first end of the second controllable switch of the first pair of controllable switches and to the first end of the third controllable switch, the first branch being connected to the second DC connection, the second branch comprising at least one submodule of a plurality of submodules connected in series, the second branch being connected by a first submodule to the first end of the fifth controllable switch of the second pair of controllable switches and to the second end of the sixth controllable switch, the second branch being connected to the second DC connection.

In a preferred mode of realization of the second embodiment, the submodules are controllable switches in a half-bridge configuration.

In a third embodiment, the hybrid modular multilevel converter comprises at least one leg, each leg being connected to an AC connection and to the three DC connections, each leg comprises at least four controllable switches of a plurality of controllable switches and two branches, a first branch comprising at least one submodule of a plurality of submodules connected in series, the first branch being connected to the first DC connection, a first submodule of the first branch being connected to a first end of a first controllable switch and to a first end of a third controllable switch, a second branch comprising at least one submodule of a plurality of submodules connected in series, the second branch being connected to the third DC connection, a first submodule of the second branch being connected to the second end of the second controllable switch and to the second end of the fourth controllable switch, the second end of the first controllable switch and the first end of the second controllable switch being connected to the second DC connection, the second end of the third controllable switch and the first end of the fourth controllable switch being connected to the AC connection.

In a preferred mode of realization of the third embodiment, the submodules are controllable switches in a full-bridge configuration or hybrid configuration for applications where the DC link voltage is less than the peak / maximum AC phase voltage; or in a half-bridge configuration for applications where the DC link voltage is greater than the peak / maximum AC phase voltage.

In a variant, an inductor is included in each branch of the second and third embodiments of a hybrid modular multilevel converter, the inductor being connected between a submodule of the branch and the DC connection the branch is connected to.

In another variant, an inductor is included in each branch of the first embodiment of a hybrid modular multilevel converter, the inductor being connected between a submodule of the branch and the AC connection the branch is connected to.

Another object of the invention is an electric arc furnace apparatus comprising any of the embodiments of an AC-DC-AC converter according to the invention, connected by its load-end converter to an electric arc furnace and by its front-end converter to a power source, the apparatus further comprising at least one controller connected to the control end of each controllable switch of the AC-DC-AC converter, wherein the at least one controller commands the switching of the front-end converter and the load-end converter according to the amount of power to transmit from the power source to the electric arc furnace.

In another embodiment, a transformer is connected between either the power source and the front-end converter or between the load-end converter and the electronic arc furnace, the at least one controller commanding the front-end converter and the load-end converter so that a real and /or reactive power control is achieved.

In a particular mode of operation, the converter of the electric arc furnace apparatus connected to a transformer is commanded to run in a shunt STATCOM mode.

The invention presents the advantage of being able to handle dynamic loads (e.g., electric arc furnaces), of being able to control active power flow between the front-end and the load-end converters and to regulate independently the reactive power of at both ends. The invention is also advantageous by being capable of riding-through DC link short faults and by being capable of shunt STATCOM operation as a back-up option matching traditional arc furnace operations or user requirements.

The invention provides a modular and scalable multilevel converter, compact in size and weight, offering a higher power density with lower losses and higher efficiency at a lower cost.

The AC-DC-AC converter is also reconfigurable to meet different application requirements.

### BRIEF DESCRIPTION OF THE DRAWINGS

The present invention will be better understood from studying the detailed description of a number of embodiments considered by way of entirely non-limiting examples and illustrated by the attached drawing in which:
- FIG. 1 illustrates a first embodiment of the invention employing a hybrid modular multilevel converter ("HMMC") as the front-end converter,
- FIG. 2 illustrates a second embodiment of the invention employing a hybrid modular multilevel converter ("HMMC") as the load-end converter,
- FIG. 3 illustrates a third embodiment of the invention employing hybrid modular multilevel converters ("HMMCs") as both the front-end and the load-end converters,
- FIG. 4 illustrates a modular multilevel converter,
- FIG. 5 illustrates a first variant of a hybrid modular multilevel converter,
- FIG. 6 illustrates a second variant of a hybrid modular multilevel converter,
- FIG. 7 illustrates a third variant of a hybrid modular multilevel converter,
- FIG. 8 illustrates a full-bridge submodule with controllable switches,
- FIG. 9 illustrates a hybrid full-bridge submodule with controllable switches,
- FIG. 10 illustrates a half-bridge submodule with controllable switches,
- FIG. 11 illustrates an embodiment of a controllable switch based on a bipolar transistor,
- FIG. 12 illustrates an embodiment of a controllable switch based on a MOSFET transistor.
- FIG. 13 illustrates an embodiment of a controllable switch based on a silicon-controlled rectifier ("SCR").
- FIG. 14 illustrates another embodiment of a controllable switch based on a silicon-controlled rectifier ("SCR").

### DETAILED DESCRIPTION

Unlike the prior art using MMCs for both the front-end and load-end converters, the invention optimizes a combination of hybrid modular multilevel converters ("HMMCs") and modular multilevel converters ("MMCs") as the front-end or the load-end converters. Specific HMMC variants are chosen to optimize performance and cost based on the DC link voltages requirement, the AC source or AC load voltages. The present invention offers power electronics converter topologies capable of running separate independent reactive power controls and shunt STATCOM operations for both the front-end and load-end converters.

Moreover, the present invention has fewer components (fewer modules / devices count), smaller size / volume, higher power density, less loss or higher efficiency, and lower cost than the prior art. The present invention also optimizes the topologies of both the front-end and the load-end converters based on values of the DC link voltages, the AC source voltage or the AC load voltage.

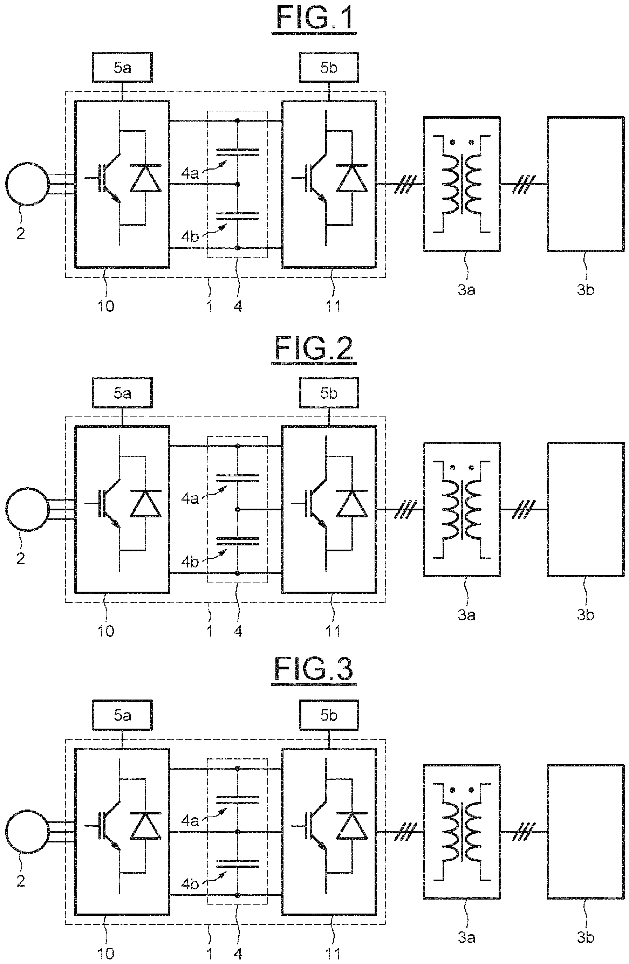

FIG. 1, FIG. 2 and FIG. 3 illustrate different embodiments of a back-to-back AC-DC-AC power conversion system. Its operation involves the load-end converter through a transformer 3a. A similar arrangement where the front-end converter is connected to a power source through a transformer is within the scope of the present invention. The load-end converter 11 or the front-end converter 10 employ controllable switches in order to either director or regulate power. The controllable switches can be controlled in order to modify the real and reactive power used / consumed or (re-)generated by the load (e.g., the electric arc furnace). The load-end converter control and the front-end converter control are independent or decoupled. In some embodiments, the controls are directly or indirectly linked.

In a first embodiment of the invention, illustrated by FIG. 1, the AC-DC-AC converter 1 is connected to a power source 2 and to a transformer 3a. The transformer 3a isolates a load 3b (e.g., the electric arc furnace) from the AC-DC-AC converter 1.

The AC-DC-AC converter 1 comprises a front-end converter 10 connected to the power source 2, a load-end converter 11 connected to the transformer 3a, and a DC link 4 connected in between the front-end converter 10 and the load-end converter 11.

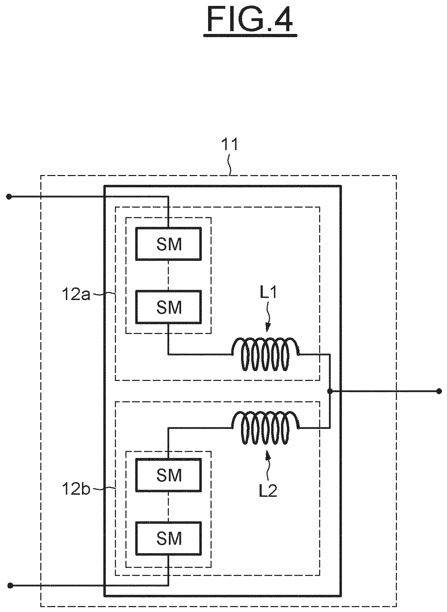

The DC link 4 comprises at least two capacitors 4a, 4b of a plurality of capacitors connected in series, both capacitors 4a, 4b also connected to a pair of DC connections of the load-end converter. In this embodiment, the load-end converter is an MMC, as illustrated by FIG. 4 and as described in the prior art. A first DC connection of the MMC is connected to a first connection of the first capacitor 4a, the second connection of the first capacitor 4a is connected in series to a first connection of the second capacitor 4b and the second DC connection of the MMC is connected to the second connection of the second capacitor 4b.

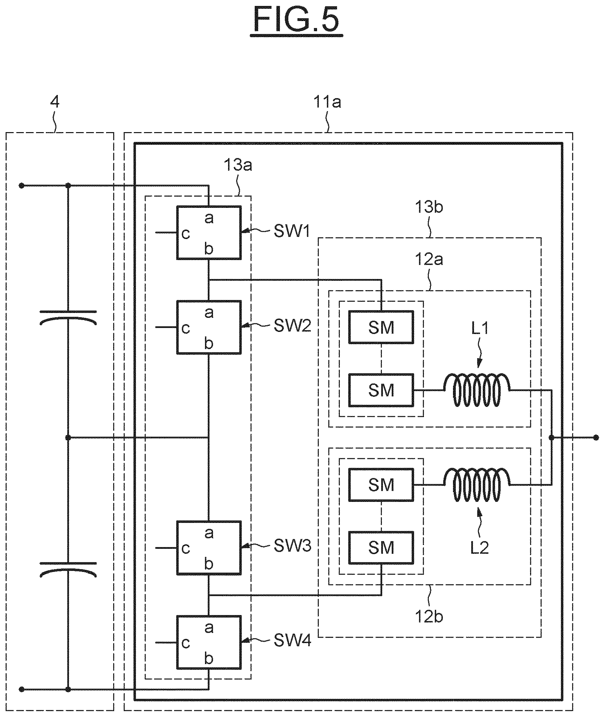

The front-end converter is one of the HMMC variants as illustrated by FIG. 5 to FIG. 7. Since an HMMC variant comprises three DC connections, the connection of the HMMC to the DC link 4 differs from the connection of the MMC to the DC link 4. A first DC connection of the HMMC is connected to a first connection of the first capacitor 4a. A second DC connection of the HMMC is connected to both the second connection of the first capacitor 4a and to the first connection of the second capacitor 4b. The third DC connection of the HMMC is connected to the second connection of the second capacitor 4b.

The AC-DC-AC converter comprises a first controller 5a for controlling and switching the controllable switches comprised within the front-end converter 10 and a second controller 5b for controlling and switching the controllable switches comprised within the load-end converter 11. Depending on the embodiments, the first controller 5a and the second controller 5b are independent, directly or indirectly linked, or integrated within a same control unit.

In a second embodiment of the invention, illustrated by FIG. 2, the front-end converter is an MMC and the load-end converter is an HMMC. The structure of the DC link is modified to accommodate this change.

As with the first embodiment, the DC link 4 comprises at least two capacitors 4a, 4b of a plurality of capacitors connected in series, each simultaneously connected to the DC connections of the MMC and to the HMMC. As the load-end converter 11 is an HMMC, it comprises three DC connections. Here again, a first DC connection of the HMMC is connected to a first connection of the first capacitor 4a. A second DC connection of the HMMC is connected to both the second connection of the first capacitor 4a and to the first connection of the second capacitor 4b. The third DC connection of the HMMC is connected to the second connection of the second capacitor 4b.

The load-end converter is one of the HMMC variants as illustrated by FIG.5 to FIG.7.

The AC-DC-AC converter also comprises a first controller 5a for controlling and switching the controllable switches comprised within the front-end converter 10 and a second controller 5b for controlling and switching the controllable switches comprised within the load-end converter 11. Depending on the embodiments, the first controller 5a and the second controller 5b are independent, directly or indirectly linked, or integrated within a same control unit.

In a third embodiment of the invention, illustrated by FIG. 3, both the front-end converter and the load-end converter are an HMMC. The structure of the DC link is modified to accommodate this change.

The DC link still presents at least two capacitors 4a, 4b of a plurality of capacitors connected in series.

A first DC connection of the front-end HMMC and a first DC connection of the load-end HMMC are connected to a first connection of the first capacitor 4a. A second DC connection of the front-end HMMC and a second DC connection of the load-end HMMC are connected to both the second connection of the first capacitor 4a and to the first connection of the second capacitor 4b. The third DC connection of the front-end HMMC and a third DC connection of the load-end HMMC are connected to the second connection of the second capacitor 4b.

The front-end converter and the load-end converter are one of the HMMC variants as illustrated by FIGs 5 to 7.

The AC-DC-AC converter comprises a first controller 5a for controlling and switching the controllable switches comprised within the front-end converter 10 and a second controller 5b for controlling and switching the controllable switches comprised within the load-end converter 11. Depending on the embodiments, the first controller 5a and the second controller 5b are independent, directly or indirectly linked or integrated within a same control unit.

Referring to FIG. 4, a modular multilevel converter MMC will now be described. The MMC comprises at least one leg 11, each leg 11 being connected to two connections on the DC side and one connection on the AC side. Each leg 11 comprises two branches 12a, 12b, both connected to the AC connection, and each connected to a DC connection. Each branch 12a, 12b comprises at least one submodule SM of a plurality of submodules (two shown in FIG. 4) connected in series to an inductor L1 or L2. The first branch 12a comprising a first inductor L1 is connected to the first DC connection by a submodule SM and to the AC connection through the first inductor L1. The second branch 12b comprising a second inductor L2 is connected to the second DC connection by a submodule SM and to the AC connection through the second inductor L2.

An inductor is to be understood in the broader sense, as an element exhibiting an inductance, or an impedance with an inductance component. The inductance can be either intrinsic or parasitic.

Other embodiments of the modular multilevel converter variant comprise a different number of legs. In other words, in other embodiments, a modular multilevel converter variant comprises at least two legs. The first DC connections of the two or multiple legs are connected together, and the second DC connections of the two or multiple legs are connected together. The AC connections of the two or multiple legs are independent. They form two or multiple phases of the AC connections.

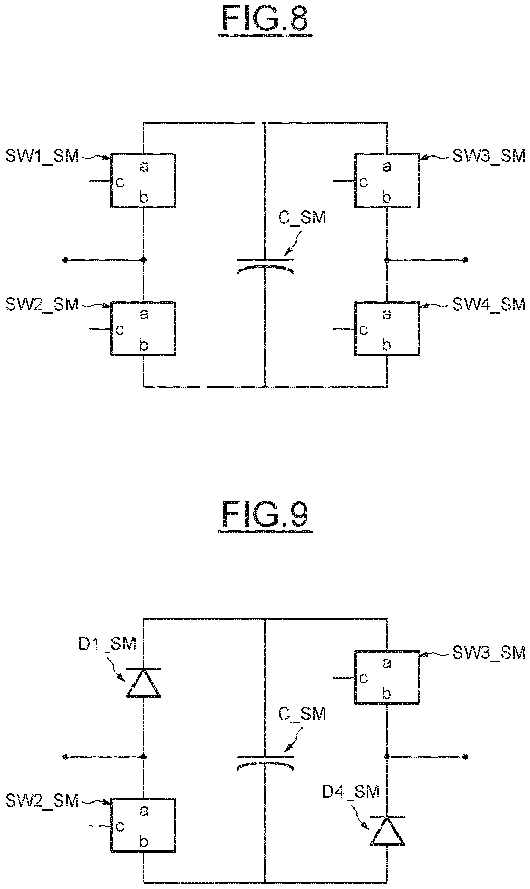

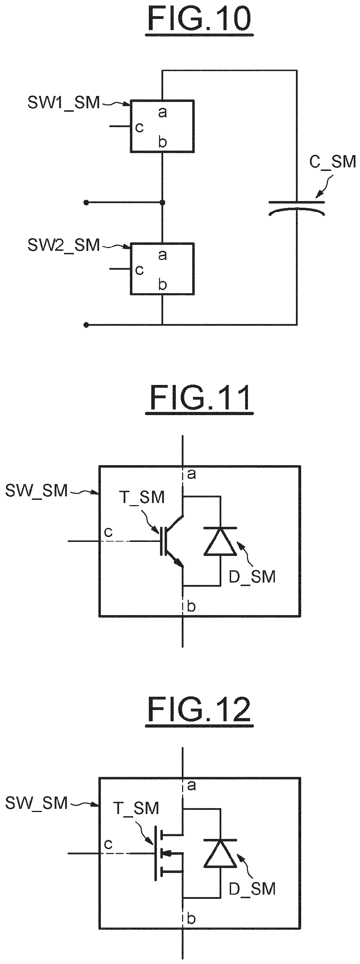

The submodules used in the MMC are full-bridge submodules (as illustrated in FIG. 8), hybrid full-bridge submodules (as illustrated in FIG. 9) or half-bridge submodules (as illustrated in FIG. 10) or any combination thereof.

In a preferred embodiment, full-bridge submodules or hybrid submodules are used in applications where the DC link voltage is less than the peak / maximum AC phase voltage; or half-bridge submodules are used in applications where the DC link voltage is greater than the peak / maximum AC phase voltage.

A first variant of a hybrid modular multilevel converter is illustrated by FIG. 5. It comprises at least a leg 11a connected to an AC connection and to the three DC connections. Each leg 11a comprises a first string 13a comprising at least four controllable switches SW1, SW2, SW3, SW4 of a plurality of controllable switches connected in series and a second string 13b comprising two branches 12a, 12b, each branch 12a, 12b comprising at least one submodule SM of a plurality of submodules (two shown in each branch of 12a or 12b in FIG. 5) and an inductor L1 or L2 in series.

Each controllable switch SW1, SW2, SW3, SW4 comprises a first end, a second end and a control end, respectively labelled a, b and c.

A first controllable switch SW1 is connected by the first end to the first DC connection, and by the second end to the first end of a second controllable switch SW2 and to the second string 13b.

The second end of the second controllable switch SW2 is connected to both the second DC connection and the first end of a third controllable switch SW3. The second end of the third controllable switch SW3 is connected to a first end of fourth controllable switch SW4 and to the second string 13b.

The second end of the fourth controllable switch SW4 is connected to the third DC connection.

The first branch 12a of the second string 13b is connected by a first submodule SM to the first string 13a, in particular to the second end of the first controllable switch SW1 and the first end of the second controllable switch SW2.

The second branch 12b of the second string 13b is connected by a first submodule SM to the first string 13a, in particular to the second end of the third controllable switch SW3 and the first end of the fourth controllable switch SW4.

The first branch 12a and the second branch 12b are connected to the AC connection through their respective inductors L1, L2.

Other embodiments of the first hybrid modular multilevel converter variant comprise a different number of legs. In other words, in other embodiments, a first hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In each branch 12a, 12b, the submodules SM are full-bridge submodules (as illustrated in FIG. 8), hybrid full-bridge submodules (as illustrated in FIG. 9) or half-bridge submodules (as illustrated in FIG. 10) or any combination thereof.

In a preferred embodiment, full-bridge submodules or hybrid submodules are used in applications where the DC link voltage is less than the peak / maximum AC phase voltage; or half-bridge submodules are used in applications where the DC link voltage is greater than the peak / maximum AC phase voltage.

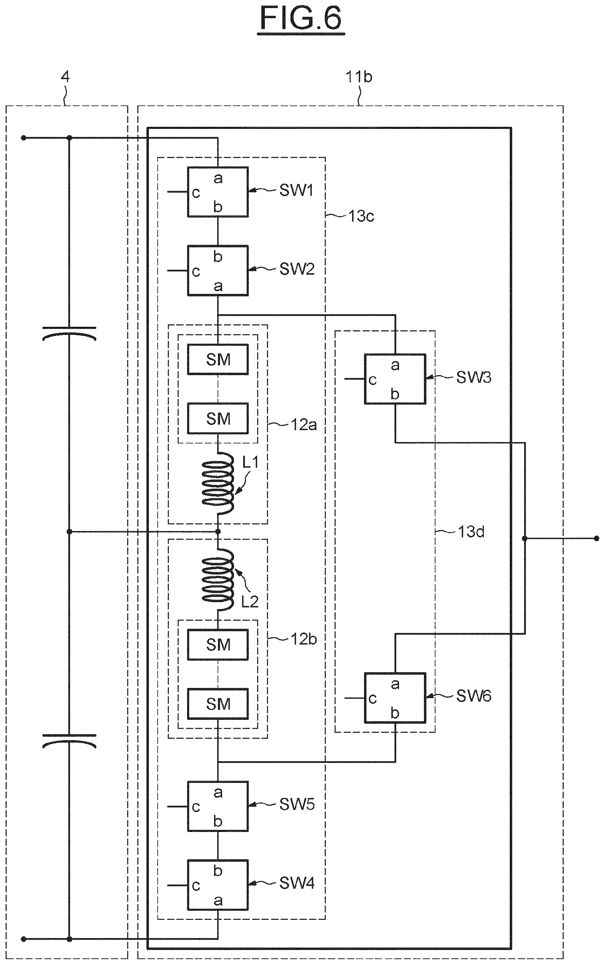

A second variant of a hybrid modular multilevel converter is illustrated by FIG. 6. It comprises a leg 11b connected to an AC connection and to the three DC connections.

A leg 11b comprises a first string 13c comprising two branches 12a, 12b, each branch comprising at least one submodule SM of a plurality of submodules (two shown in each branch of 12a, 12b in FIG. 6), at least two pairs of controllable switches, SW1, SW2 and SW4, SW5 of a plurality of pairs of controllable switches connected in series with opposite polarities, and an inductor L1 or L2 in series, and a second string 13d comprising at least two controllable switches SW3, SW6 of a plurality of controllable switches connected in series in each switch SW3, SW6 location.

Each controllable switch SW1, SW2, SW3, SW4, SW5, SW6 comprises a first end, a second end and a control end, respectively labelled a, b and c.

In the first string 13c, the first end of the first controllable switch SW1 of the first pair of controllable switches is connected to a first DC connection. The second end of the first controllable switch SW1 of the first pair of controllable switches is connected to the second end of a second controllable switch SW2 of the first pair of controllable switches.

The first end of the second controllable switch SW2 of the first pair of controllable switches is connected to a first submodule SM of the first branch 12a and to the second string 13d.

The first end of a fourth controllable switch SW4 of the second pair of controllable switches is connected to a third DC connection. The second end of the fourth controllable switch SW4 of the second pair of controllable switches is connected to the second end of a fifth controllable switch SW5 of the second pair of controllable switches. The first end of the fifth controllable switch SW5 of the second pair of controllable switches is connected to a first submodule SM of the second branch 12b and to the second string 13d.

The inductor L1 of the first branch 12a and the inductor L2 of the second branch 12b are connected together to the second DC connection.

In the second string 13d, the first end of the third controllable switch SW3 is connected to the first string 13c, in particular to the first end of the second controllable switch SW2 of the first pair of controllable switches and to the first submodule SM of the first branch 12a.

The second end of the sixth controllable switch SW6 is connected to the first string 13c, in particular to the first end of the fifth controllable switch SW5 of the second pair of controllable switches and to the first submodule SM of the second branch 12b.

The second end of the third controllable switch SW3 and the first end of the sixth controllable switch SW6 are connected together to the AC connection.

Other embodiments of the second hybrid modular multilevel converter variant comprise a different number of legs. In other words, in other embodiments, a second hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections. In each branch 12a, 12b, the submodules SM are full-bridge submodules (as illustrated in FIG. 8), hybrid full-bridge submodules (as illustrated in FIG. 9) or half-bridge submodules (as illustrated in FIG. 10) or any combination thereof.

In a preferred embodiment, the submodules SM are half-bridge submodules as illustrated by FIG. 10.

The second HMMC variant is best suited for applications where DC link voltage is less than the instantaneous max supply / source AC phase voltage. The second HMMC variant is also uniquely designed and optimized for lower cost with the fewest number of components / devices counts.

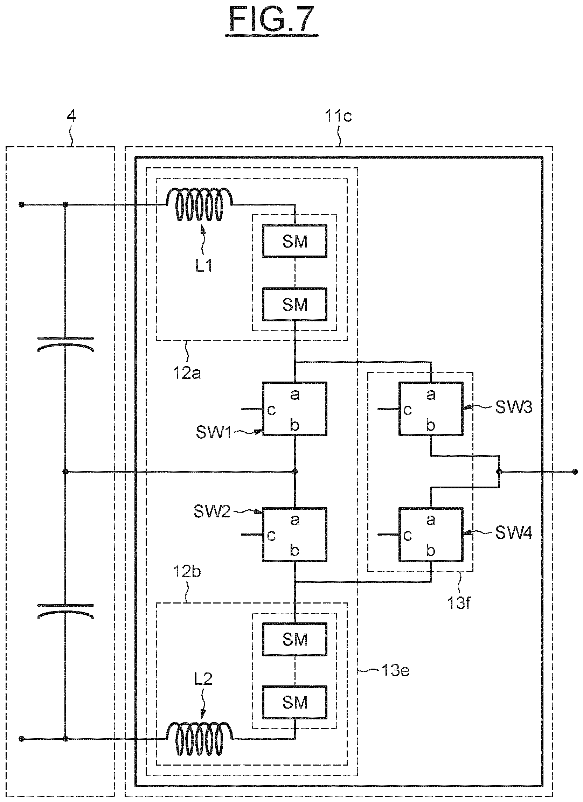

A third variant of a hybrid modular multilevel converter is illustrated by FIG. 7. It comprises a leg 11c connected to an AC connection and to the three DC connections.

The leg 11c comprises a first string 13e comprising two branches each connected to at least two controllable switches SW1, SW2 of a plurality of controllable switches connected in series and a second string 13f comprising at least of two controllable switches SW3, SW4 of a plurality of controllable switches. Each branch 12a, 12b comprises at least one submodules SM of a plurality of submodules (two shown in each branch of 12a or 12b in FIG. 7) in series and an inductor L1, L2 connected in series.

In the first string 13e, the first branch 12a is connected to the first DC connection by the first inductor L1. The first branch 12a is connected by a first submodule SM to the first end of a first controllable switch SW1 and to the second string 13f.

Also in the first string 13e, the second branch is connected to the third DC connection by the second inductor L2. The second branch 12b is connected by a first submodule SM to the second end of a second controllable switch SW2 and to the second string 13f.

Still in the first string 13e, the second end of the first controllable switch SW1 is connected to the first end of the second controllable switch SW2 and to the second DC connection.

The second string 13f comprises at least two controllable switches SW3, SW4 of a plurality of controllable switches connected in series in each switch location SW3, SW4. The first end of the third controllable switch SW3 is connected to the first string 13e, in particular to the first end of first controllable switch SW1 and to the first submodule of the first branch 12a.

The second end of the fourth controllable switch SW4 is connected to the first string 13e, in particular to the second end of second controllable switch SW2 and to the first submodule of the second branch 12b.

The second end of the third controllable switch SW3 and the first end of the fourth controllable switch SW4 are connected to the AC connection.

Other embodiments of the third hybrid modular multilevel converter variant comprise a different number of legs. In other words, in other embodiments, a third hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In either branch 12a, 12b, the submodules SM are full-bridge submodules (as illustrated in FIG. 8), hybrid full-bridge submodules (as illustrated in FIG. 9) or half-bridge submodules (as illustrated in FIG. 10) or any combination thereof.

In a preferred embodiment, full-bridge submodules or hybrid submodules are used in applications where the DC link voltage is less than the peak / maximum AC phase voltage; or half-bridge submodules are used in applications where the DC link voltage is greater than the peak / maximum AC phase voltage.

The different variants of submodules SM will now be described.

A first submodule variant is built upon controllable switches in a full bridge configuration as illustrated in FIG. 8. It comprises two connections, four controllable switches SW1_SM, SW2_SM, SW3_SM, SW4_SM, and a capacitor C_SM.

Each controllable switch SW1_SM, SW2_SM, SW3_SM, SW4_SM comprises a first end, a second end and a control end, respectively labelled a, b and c.

A first submodule connection is connected to the second end of a first controllable switch SW1_SM and to the first end of a second controllable switch SW2_SM.

A second connection is connected to the second end of the third controllable switch SW3_SM and to the first end of the fourth controllable switch SW4_SM.

A first end of the capacitor C_SM is connected to both first ends of the first controllable switch SW1_SM and third controllable switch SW3_SM. A second end of the capacitor C_SM is connected both second ends of the second controllable switch SW2_SM and fourth controllable switch SW4_SM.

In a second variant, the submodule SM is a hybrid submodule based on two controllable switches in a full bridge configuration with diodes, as illustrated in FIG. 9 instead of a four controllable switches in a full bridge configuration.

A hybrid submodule essentially corresponds to a regular submodule wherein the first and fourth controllable switches SW1_SM, SW4_SM are replaced by diodes D1_SM, D4_SM. For the sake of comprehensiveness, FIG. 8 naming scheme is kept. A hybrid submodule comprises two connections, two controllable switches SW2_SM, SW3_SM, two diodes D1_SM, D4_SM and a capacitor C_SM.

A first connection is connected to the first diode D1_SM anode and to a first end of the second controllable switch SW2_SM.

A second connection is connected to the second end of third controllable switch SW3_SM and to the fourth diode D4_SM cathode.

A first connection of the capacitor C_SM is connected on one hand to the first diode D1_SM cathode and to the first end of the third controllable switch SW3_SM. Another connection of the capacitor C_SM is connected to the second end of the second controllable switch SW2_SM and to the fourth diode D4_SM anode.

In a third variant, the submodules SM are controllable switches in a half bridge configuration as illustrated in FIG. 10.

It comprises two connections, two controllable switches SW1_SM, SW2_SM, and a capacitor C_SM. The first connection is connected to the second end of the first controllable switch SW1_SM and to the first end of the second controllable switch SW2_SM. The second connection is connected to the second end of the second controllable switch SW2_SM.

The capacitor C_SM is connected on one hand to the first end of the first controllable switch SW1_SM and on the other hand to both the second connection and the second end of the second controllable switch SW2_SM.

FIG. 11 and FIG. 12 illustrate exemplary embodiments of a controllable switch SW_SM. The controllable switch SW_SM can be any of the controllable switches SW1, SW2, SW3, SW4, SW5, SW6 SW1_SM, SW2_SM, SW3_SM, or SW4_SM comprised in the embodiments described above.

The controllable switch SW_SM comprises a first end, a second end, and a control end, respectively labelled a, b and c. The first end is connected to the drain of a bipolar transistor T_SM, the second end being connected to the source of said bipolar transistor T_SM. A freewheeling diode D_SM is connected so that its anode is connected to the transistor T_SM drain, its cathode being connected to the transistor T_SM source. The control end is connected to the transistor T_SM gate.

Other embodiments of the controllable switch SW_SM comprise at least two transistors connected in parallel, in series or in a combination or parallel and series.

The transistor T_SM illustrated in FIG. 11 is a bipolar transistor. However, other kinds of transistors can be used, like for example MOSFETs ("Metal Oxide Silicon Field Effect Transistors") as pictured in FIG. 12, or IEGTs ("Injection Enhanced Gate Transistors").

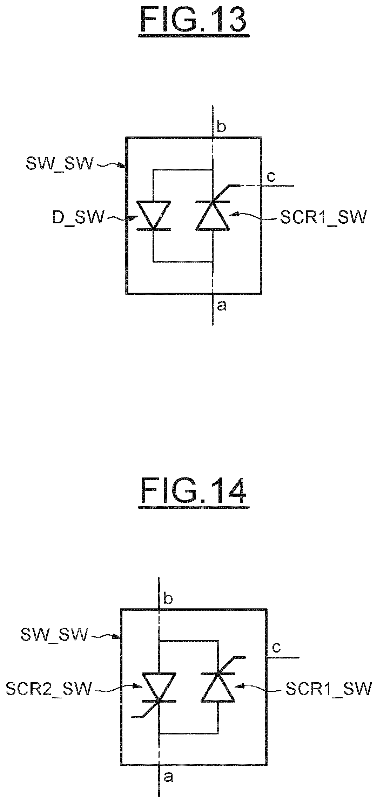

FIG. 13 and FIG. 14 illustrate yet other exemplary embodiments of a controllable switch SW SW. The controllable switch SW_SW can be any of the controllable switches SW1, SW2, SW3, SW4, SW5, SW6 comprised in the embodiments described above.

The controllable switches SW_SW shown in FIG. 13 and FIG 14 includes a SCR ("Silicon-Controlled Rectifier") connected to an antiparallel freewheeling diode.

FIG. 13 illustrates a first embodiment of an SCR-based controllable switch SW_SW comprising a silicon-controlled rectifier labelled SCR1_SW and a freewheeling diode D_SW. The first end of the SCR-based controllable switch SW SW is connected to the anode of the silicon-controlled rectifier SCR1_SW and to the cathode of the freewheeling diode D_SW. The second end of the SCR-based controllable switch SW_SW is connected to the cathode of the SCR SCR1_SW and to the anode of the freewheeling diode D_SW. The control end of the SCR-based controllable switch SW_SW is connected to the gate of the silicon-controlled rectifier SCR1_SW.

FIG. 14 illustrates a second embodiment of an SCR-based controllable switch SW_SW comprising two silicon-controlled rectifiers labelled SCR1_SW and SCR2_SW.

A first end of the SCR-based controllable switch SW_SW is connected to the anode of the first silicon-controlled rectifier SCR1_SW and to the cathode of the second silicon-controlled rectifier SCR2_SW.

The second end of the SCR-based controllable switch SW_SW is connected to the cathode of the first silicon-controlled rectifier SCR1_SW and to the anode of the second silicon-controlled rectifier SCR2_SW.

The control end of the SCR-based controllable switch SW_SW is connected directly or indirectly to the gates of both silicon-controlled rectifier SCR1_SW, SCR2_SW. For instance, one of the silicon-controlled rectifiers can be connected directly while the other is connected through signal processing means. Such signal processing means can be configured to delay a signal by a duration, either a fixed duration or a variable duration, or to trigger the emission of a pulsed width modulated signal upon receiving a command signal. The signal processing means can be configured to generate a command signal based on a multiplexed signal received. Other signal processing means can be used without departing from the scope of the invention.

As stated above, when the load is connected to the load-end converter through a transformer, or when the power source is connected to the front-end converter through a transformer, the electronic control means can command the controllable switches so that a real and reactive power control is achieved. Front-end converter and load-end converter can have their real and reactive power adjusted independently.

The AC-DC-AC converter 1 described above provides an improvement to the prior art with a smaller and more efficient converter.

## Claims

1. An AC-DC-AC converter for delivering power to a load from a power source, the AC-DC-AC converter comprising a front-end converter (10), a load-end converter (11), and a DC link (4), at least one of the front-end converter (10) and the load-end converter (11) being a hybrid modular multilevel converter.

2. The AC-DC-AC converter according to claim 1, wherein the hybrid modular multilevel converter comprises at least one leg, each leg being connected to an AC connection and to the three DC connections, each leg comprising at least four controllable switches (SW1, SW2, SW3, SW4) of a plurality of controllable switches connected in series and two branches (12a, 12b), a first end of a first controllable switch (SW1) connected to a first DC connection, a first end of a second controllable switch (SW2) connected to a second end of the first controllable switch (SW1), the second end of the second controllable switch (SW2) connected to a second DC connection, a first end of a third controllable switch (SW3) connected to a second end of the second controllable switch (SW2) and to the second DC connection, a first end of a fourth controllable switch (SW4) connected to a second end of the third controllable switch (SW3), a second end of the fourth controllable switch (SW4) is connected to the third DC connection, the first branch (12a) comprising at least one submodule (SM) of a plurality of submodules connected in series, the first branch (12a) being connected by a first submodule (SM) to a second end of the first controllable switch (SW1) and to a first end of the second controllable switch (SW2), the first branch being connected to the AC connection, the second branch (12b) comprising at least one submodule (SM) a plurality of submodules connected in series, the second branch (12b) being connected by a first submodule (SM) to a second end of the third controllable switch (SW3) and to a first end of the fourth controllable switch (SW4), the second branch being connected to the AC connection.

3. The AC-DC-AC converter according to claim 1, wherein the hybrid modular multilevel converter comprises at least one leg, each leg being connected to an AC connection and to the three DC connections, each leg comprising at least two pairs of controllable switches (SW1, SW2, SW4, SW5) of a plurality of pairs of controllable switches connected in series with opposite polarities and at least two controllable switches (SW3, SW6) of a plurality of controllable switches connected in series, a first end of a first controllable switch (SW1) of the first pair of controllable switches (SW1, SW2) connected to a first DC connection, a second end of a second controllable switch (SW2) of the first pair of controllable switches (SW1, SW2) is connected to the second end of the first controllable switch (SW1) of the first pair of controllable switches (SW1, SW2), a first end of a third controllable switch (SW3) is connected to the first end of the second controllable switch (SW2) of the first pair of controllable switches (SW1, SW2), the second end of the third controllable switch (SW3) is connected to the AC connection, a first end of a fourth controllable switch (SW4) of the second pair of controllable switches (SW4, SW5) is connected to a third DC connection, a second end of a fifth controllable switch (SW5) of the second pair of controllable switches (SW4, SW5) is connected to a second end of the fourth controllable switch (SW4) of the second pair of controllable switches (SW4, SW5), a second end of a sixth controllable switch (SW6) is connected to the first end of the fifth controllable switch (SW5) of the second pair of controllable switches (SW4, SW5), a first end of the sixth controllable switch (SW6) is connected to the AC connection, the first branch (12a) comprising at least one submodule (SM) of a plurality of submodules connected in series, the first branch (12a) being connected by a first submodule (SM) to the first end of the second controllable switch (SW2) of the first pair of controllable switches (SW1, SW2) and to the first end of the third controllable switch (SW3), the first branch being connected to the second DC, the second branch (12b) comprising at least one submodule (SM) of a plurality of submodules connected in series, the second branch (12b) being connected by a first submodule (SM) to the first end of the fifth controllable switch (SW5) of the second pair of controllable switches (SW4, SW5) and to the second end of the sixth controllable switch (SW6), the second branch (12b) being connected to the second DC connection.

4. The AC-DC-AC converter according to claim 1, wherein the hybrid modular multilevel converter comprises at least one leg, each leg being connected to an AC connection and to the three DC connections, each leg comprises at least four controllable switches (SW1, SW2, SW3, SW4) of a plurality of switches connected in series and two branches (12a, 12b), a first branch (12a) comprising at least one submodule (SM) of a plurality of submodules connected in series, the first branch (12a) being connected to the first DC connection, a first submodule (SM) of the first branch (12a) being connected to a first end of a first controllable switch (SW1) and to a first end of a third controllable switch (SW3), a second branch (12b) comprising at least one submodule (SM) of a plurality of submodules connected in series, the second branch (12b) being connected to the third DC connection, a first submodule (SM) of the second branch (12b) being connected to the second end of the second controllable switch (SW2) and to the second end of the fourth controllable switch (SW4) , the second end of the first controllable switch (SW1) and the first end of the second controllable switch (SW2) being connected to the second DC connection, the second end of the third controllable switch (SW3) and the first end of the fourth controllable switch (SW4) being connected to the AC connection.

5. The AC-DC-AC converter according to any of claims 3 or 4, wherein each branch (12a, 12b) comprises an inductor (L1, L2) connected between a submodule (SM) of the branch (12a, 12b) and the DC connection the branch is connected to.

6. The AC-DC-AC converter according to claim 2, wherein each branch (12a, 12b) comprises an inductor (L1, L2) connected between a submodule (SM) of the branch (12a, 12b) and the AC connection the branch is connected to.

7. The AC-DC-AC converter according to claim 3, wherein all the submodules are half-bridge submodules.

8. The AC-DC-AC converter according to either claims 2 or 4, wherein all the submodules are full-bridge submodules or hybrid full-bridge submodules.

9. The AC-DC-AC converter according to any of claims 2 to 4, wherein a submodule is a half-bridge submodule, a full-bridge submodule or a hybrid full-bridge submodule.

10. The AC-DC-AC converter according to either claims 7 or 9, wherein a half-bridge submodule comprises a first connection connected to a second end of a first controllable switch (SW1_SM) and to a first end of a second controllable switch (SW2_SM), a second connection connected to the second end of the second controllable switch (SW2_SM), a capacitor (C_SM) connected on one hand to the first end of the first controllable switch (SW1_SM) and on another hand to both the second connection and the second end of the second controllable switch (SW2_SM).

11. The AC-DC-AC converter according to either claims 8 or 9, wherein a full-bridge submodule comprises a first connection connected to a second end of a first controllable switch (SW1_SM) and to a first end of a second controllable switch (SW2_SM), a second connection is connected to a second end of a third controllable switch (SW3_SM) and to a first end of a fourth controllable switch (SW4_SM), a capacitor (C_SM) being connected on one hand to both first ends of the first controllable switch (SW1_SM) and third controllable switch (SW3_SM), and on another hand to both second ends of the second controllable switch (SW2_SM) and fourth controllable switch (SW4_SM).

12. The AC-DC-AC converter according to either claims 8 or 9, wherein a hybrid full-bridge submodule comprises a first connection connected to the first diode (D1_SM) anode and to a first end of a second controllable switch (SW2_SM), a second connection connected to a second end of the third controllable switch (SW3_SM) and to the fourth diode (D4_SM) cathode, a capacitor (C_SM) connected on one hand to the first diode (D1_SM) cathode and to the first end of the third controllable switch (SW3_SM), and on another hand to the second end of the second controllable switch (SW2_SM) and to the fourth diode (D4_SM) anode.

13. The AC-DC-AC converter according to any of claims 2 to 12, wherein a controllable switch comprises at least a transistor and a freewheeling diode, the transistor source and the freewheeling diode cathode being connected to the first end of the controllable switch (SW_SM), the transistor drain and the freewheeling diode anode being connected to the second end of the controllable switch (SW_SM), the transistor gate being connected to the control end of the controllable switch (SW_SM).

14. The AC-DC-AC converter according to claim 13, wherein a transistor is an insulated-gate bipolar transistor, an injection-enhanced gate transistor, notably Si-based or a metal-oxide-semiconductor field-effect transistors, notably SiC-based.

15. The AC-DC-AC converter according to claims 2 to 4, wherein the controllable switch is a controllable switch (SW_SW) including a silicon-controlled rectifier (SCR1_SW) and an antiparallel freewheeling diode (D_SW) or the controllable switch (SW_SW) includes a silicon-controlled rectifier (SCR1_SW) and an antiparallel silicon-controlled rectifier (SCR2_SW).

16. An electric arc furnace apparatus comprising an AC-DC-AC converter according to claims 1 to 15, connected by its load-end converter (11) to an electric arc furnace and by its front-end converter (10) to a power source (2), the apparatus further comprising at least one controller (5a, 5b) connected to the control end of each controllable switch of the AC-DC-AC converter, wherein the at least one controller (5a, 5b) commands the switching of the front-end converter (10) and the load-end converter (11) according to the amount of power to transmit from the power source (2) to the electric arc furnace.

17. The electric arc furnace apparatus according to claim 16, wherein a transformer (3a) is connected between either the power source (2) and the front-end converter (10) or between the load-end converter (11) and the electronic arc furnace, the at least one controller (5a, 5b) commands the front-end converter (10) and the load-end converter (11) so that a real and / or reactive power control is achieved.
